# EUROPÄISCHE PATENTSCHRIFT

(11) **EP 3 910 236 B1**
(45) Veröffentlichungstag und Bekanntmachung des Hinweises auf die Patenterteilung: **03.04.2024**
(21) Anmeldenummer: 20020224.0
(22) Anmeldetag: 15.05.2020
(51) Int. Cl.: F23C 9/00, F23G 7/06

(54) **PROZESSBRENNER UND VERFAHREN ZUR VERBRENNUNG KOHLENMONOXIDHALTIGER BRENNGASE**
PROCESS BURNER AND METHOD FOR COMBUSTION OF COMBUSTION GASES CONTAINING CARBON MONOXIDE
BRÛLEUR DE PROCESSUS ET PROCÉDÉ DE COMBUSTION DES GAZ DE COMBUSTION CONTENANT DU MONOXYDE DE CARBONE

(43) Veröffentlichungstag der Anmeldung: 17.11.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Coscia, Antonio, 65589 Hadamar (DE); Bartels, Katja, 60598 Frankfurt (DE)
(74) Vertreter: Stang, Stefan

(56) Entgegenhaltungen:
- WO-A1-2015/036914
- JP-A- S54 157 338
- US-A1- 2002 197 574

## Beschreibung

### Technisches Gebiet der Erfindung

Die Erfindung betrifft einen Prozessbrenner zur Verbrennung einer Mehrzahl von Brenngasen mit einem gasförmigen Hilfsmedium, wobei eines der Brenngase Kohlenmonoxid (CO) umfasst. Die Erfindung betrifft ferner einen Dampfreformer oder Steamcracker, aufweisend einen erfindungsgemäßen Prozessbrenner. Die Erfindung betrifft weiterhin ein Verfahren zur Verbrennung einer Mehrzahl von Brenngasen mit einem gasförmigen Hilfsmedium in einem Prozessbrenner, wobei der Prozessbrenner eine erste Brenngaseinheit, eine zweite Brenngaseinheit und eine Hilfsmedieneinheit aufweist, und wobei eines der Brenngase Kohlenmonoxid (CO) aufweist. Die Erfindung betrifft ferner die Verwendung des erfindungsgemäßen Prozessbrenners in einem erfindungsgemäßen Verfahren.

### Stand der Technik

Prozessbrenner werden in Heizvorrichtungen und Öfen in der petrochemischen und chemischen Prozessindustrie eingesetzt. Beispielsweise kommen Prozessbrenner als Heizvorrichtungen in Dampfreformern zur Beheizung der in einem Ofen senkrecht angeordneten Reaktionsrohre zum Einsatz. In den Reaktionsrohren findet eine Umsetzung von Erdgas oder anderen geeigneten kohlenstoffhaltigen Einsatzstoffen mit Wasserdampf an Nickelkatalysatoren statt, wobei als primäres Produkt Synthesegas gebildet wird. Synthesegas ist ein Gemisch aus Wasserstoff, Kohlemonoxid sowie unerwünschten Nebenprodukten wie Kohlendioxid.

Dient die Herstellung von Synthesegas in erster Linie der Produktion von Wasserstoff, wird das Kohlenmonoxid entweder durch die bekannte Wassergas-Shift-Reaktion weiter zu Wasserstoff und Kohlendioxid umgesetzt, oder es wird aus dem primären Synthesegasgemisch abgetrennt. Dies kann beispielsweise mit Hilfe einer Druckwechsel-Adsorptionsvorrichtung erfolgen. Häufig besteht bei solchen Verfahren die Anforderung, einen Teil des Kohlenmonoxids als Brennstoff zum Prozessbrenner zurückzuführen. Daneben ist eine Vielzahl weiterer Voraussetzungen denkbar, unter denen Kohlenmonoxid als Brennstoff für einen Prozessbrenner verwendet werden soll.

Bei der Verbrennung von Kohlenmonoxid mit Sauerstoff zur Kohlendioxid tritt die exotherme Boudouard-Reaktion, auch als Boudouard-Gleichgewicht bezeichnet, in Konkurrenz zur eigentlichen Verbrennungsreaktion, gemäß 2 CO 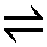 C (fest) + CO₂, wobei die Bildung von festem Kohlenstoff und Kohlendioxid gemäß dem Prinzip von Le Chatelier durch hohe Drücke und niedrige Temperaturen begünstigt wird. Trotzdem tritt in Prozessbrennern, auch bei den vorherrschenden hohen Temperaturen in der Verbrennungszone im Bereich der Brennerkachel, auch als Brennerstein bezeichnet, das Problem der Verkokung von Brenngasleitungen, der Brennerlanzen oder Brennerdüsen aufgrund fester Kohlenstoffablagerungen auf. Dies ist unabhängig davon der Fall, ob das Kohlenmonoxid im Gemisch mit anderen Brenngasen oder separat in das Brennersystem eingespeist wird. Die vorgenannten Ablagerungen führen zu Verstopfungen in den besagten Bauteilen, was den Wartungsaufwand erhöht und die Verbrennung ineffizient werden lässt.

Ein Brenner zur Injektion eines gemischten Brennstoffs aus zumindest Wasserstoff und Kohlenmonoxid in die Brennkammer einer Gasturbine wird beispielsweise in der EP 1 736 707 A2 beschrieben. Brenner mit Rauchgasrückführung sind aus US 2002/0197574 A1 und WO 2015/036914 A1 bekannt.

Aufgrund der Problematik der Kohlenstoffablagerungen in bestimmten Brennerbauteilen besteht somit Bedarf zur Verbesserung bekannter Brenner, die Kohlenmonoxid als Brennstoff verwenden, sowie zur Verbesserung entsprechender bekannter Verfahren zur Verbrennung kohlenmonoxidhaltiger Brenngase.

### Beschreibung der Erfindung

Eine Aufgabe der vorliegenden Erfindung besteht darin, die vorgenannten Nachteile des Standes der Technik zumindest teilweise zu überwinden.

Insbesondere besteht eine Aufgabe der vorliegenden Erfindung darin, einen Brenner zur Verbrennung kohlenmonoxidhaltiger Brenngase zur Verfügung zu stellen, welcher derart ausgestaltet ist, dass Ablagerungen festen Kohlenstoffs in bestimmten Brennerbauteilen, insbesondere den Brenngasleitungen, Brennerlanzen und Brennerdüsen, im Vergleich zu herkömmlichen Brennern zumindest reduziert oder gänzlich verhindert werden.

Eine weitere Aufgabe der vorliegenden Erfindung besteht darin, ein Verfahren zur Verbrennung kohlenmonoxidhaltiger Brenngase bereitzustellen, das derart ausgestaltet ist, dass im Vergleich zu bekannten Verfahren weniger oder kein fester Kohlenstoff gebildet wird.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der vorliegenden Erfindung werden zumindest teilweise gelöst durch einen Prozessbrenner, zur Verbrennung einer Mehrzahl von Brenngasen mit einem gasförmigen Hilfsmedium, wobei eines der Brenngase Kohlenmonoxid (CO) umfasst, aufweisend
a. eine erste Brenngaseinheit zum Einleiten eines ersten Brenngases, aufweisend eine erste Brenngasleitung und eine erste Brenngasdüse, wobei die erste Brenngasleitung einen ersten Brenngaseinlass und einen ersten Brenngasauslass aufweist, wobei der erste Brenngaseinlass in Fluidverbindung mit einer ersten Brenngasquelle steht und der erste Brenngasauslass mit der ersten Brenngasdüse verbunden ist;
b. eine zweite Brenngaseinheit zum Einleiten eines zweiten Brenngases, aufweisend eine zweite Brenngasleitung und eine zweite Brenngasdüse, wobei die zweite Brenngasleitung einen zweiten Brenngaseinlass und einen zweiten Brenngasauslass aufweist, wobei der zweite Brenngaseinlass in Fluidverbindung mit einer zweiten Brenngasquelle steht, wobei das Brenngas der zweiten Brenngasquelle zumindest Kohlenmonoxid (CO) aufweist, und der zweite Brenngasauslass mit der zweiten Brenngasdüse verbunden ist;
c. eine Hilfsmedieneinheit, aufweisend eine Hilfsmedienleitung und ein Brennerplenum, wobei die Hilfsmedienleitung einen Hilfsmedieneinlass und einen Hilfsmedienauslass umfasst, wobei der Hilfsmedieneinlass in Fluidverbindung mit einer Hilfsmedienquelle steht, und der Hilfsmedienauslass mit dem Brennerplenum verbunden ist;
d. eine Brennerkachel, wobei die Brennerkachel an das Brennerplenum angrenzend angeordnet ist, und die Brennerkachel eine feuerfeste Oberfläche aufweist, wobei die feuerfeste Oberfläche an eine Verbrennungszone des Prozessbrenners angrenzt, wobei die Brennerkachel und die Verbrennungszone zur Verbrennung des ersten Brenngases und des zweiten Brenngases mit dem Hilfsmedium ausgelegt sind.

Erfindungsgemäß ist vorgesehen, dass
die erste Brenngasdüse zum Einspeisen des ersten Brenngases innerhalb der Verbrennungszone angeordnet ist und
die zweite Brenngasdüse zum Einspeisen des zweiten Brenngases innerhalb der Hilfsmedieneinheit angeordnet ist.

In aus dem Stand der Technik bekannten Prozessbrennern sind die Brenngasdüsen innerhalb der Verbrennungszone im Bereich der Brennerkachel, welche einen Teil der Spitze oder des Halses des Prozessbrenners bildet, angeordnet. Im erfindungsgemäßen Prozessbrenner ist zweite Brenngasdüse innerhalb der Hilfsmedieneinheit angeordnet. Durch die zweite Brenngasdüse wird das zweite Brenngas, welches Kohlenmonoxid enthält oder daraus besteht, in den Prozessbrenner eingespeist oder injiziert. Dies geschieht erfindungsgemäß aufgrund der Anordnung der zweiten Brenngasdüse nicht innerhalb der Verbrennungszone, im Bereich der heißen Brennerspitze / des heißen Brennerhalses, sondern innerhalb der Hilfsmedieneinheit, in einem wesentlich kälteren Bereich des Prozessbrenners. Das Brenngas der ersten Brenngaseinheit wird erst im Bereich der Verbrennungszone mit dem noch kühleren Brenngas der zweiten Brenngaseinheit vermischt und verbrannt. Das zweite Brenngas, welches Kohlenmonoxid enthält oder daraus besteht, kommt somit auf dem Weg zur Verbrennungszone nicht oder erst sehr spät in Kontakt mit dem ersten Brenngas. Das zweite Brenngas kommt auf dem Weg zur Verbrennungszone lediglich in Kontakt mit dem Hilfsmedium, wobei aufgrund der kühleren Temperaturen innerhalb der Hilfsmedienleitung noch keine Verbrennung des zweiten Brenngases stattfindet. Es wurde überraschend gefunden, dass durch die Anordnung der zweiten Brenngasdüse innerhalb der Hilfsmedieneinheit weniger feste Kohlenstoffablagerungen im Bereich der Brenngasdüsen oder stromaufwärts, beispielsweise im Bereich der Brenngasleitungen, gebildet werden.

Die erste Brenngaseinheit weist zumindest eine erste Brenngasleitung auf. Die erste Brenngasleitung ist als Steigleitung ausgestaltet und stellt das erste Brenngas der ersten Brenngasquelle bereit, welches über die erste Brenngasdüse im Bereich der Hilfsmedieneinheit, jedoch nicht im Bereich der Brennerkachel oder der Verbrennungszone, in den Prozessbrenner eingespeist wird. Die erste Brenngasleitung weist einen Einlass und einen Auslass auf. Der Einlass der ersten Brenngasleitung ist mit der ersten Brenngasquelle verbunden. Das erste Brenngas der ersten Brenngasquelle weist wenig oder kein Kohlenmonoxid auf. Beispielsweise weist das erste Brenngas der ersten Brenngasquelle weniger als 10 mol-% Kohlenmonoxid auf, oder weniger als 5 mol-%, oder weniger als 2 mol-%, oder weniger als 1 mol-%, oder weniger als 0,5 mol-%. Besonders bevorzugt ist das Brenngas der ersten Brenngasquelle frei von Kohlenmonoxid. In einem Beispiel weist das erste Brenngas der ersten Brenngasquelle Erdgas, Wasserstoff und/oder ein Abgas einer Wechseldruck-Adsorptionsvorrichtung auf. Die erste Brenngasleitung kann eine sogenannte Brenngaslanze aufweisen, welche in der ersten Brenngasdüse mündet. Die Brenngaslanze weist in diesem Fall den Auslass der ersten Brenngasleitung auf.

Die zweite Brenngaseinheit weist zumindest eine zweite Brenngasleitung auf. Die zweite Brenngasleitung ist als Steigleitung ausgestaltet und stellt das zweite Brenngas der zweiten Brenngasquelle bereit, welches über die zweite Brenngasdüse im Bereich der Verbrennungszone in den Prozessbrenner eingespeist wird. Die zweite Brenngasleitung weist einen Einlass und einen Auslass auf. Der Einlass der zweiten Brenngasleitung ist mit der zweiten Brenngasquelle verbunden. Das zweite Brenngas der zweiten Brenngasquelle weist zumindest Kohlenmonoxid (CO) auf, welches in der Verbrennungszone des Prozessbrenners durch das Hilfsmedium zu Kohlendioxid (CO₂) verbrannt wird.

Das zweite Brenngas ist reich an Kohlenmonoxid oder weist Kohlenmonoxid als Hauptkomponente auf. Das zweite Brenngas weist mindestens 50 mol-% Kohlenmonoxid auf, oder mindestens 75 mol-% Kohlenmonoxid, oder mindestens 90 mol-% Kohlenmonoxid, oder mindestens 95 mol-% Kohlenmonoxid, oder mindestens 99 mol-% Kohlenmonoxid. In einem Beispiel besteht das zweite Brenngas aus Kohlenmonoxid, optional neben einem kleinen Anteil nicht zu vermeidender Verunreinigungen.

Die Hilfsmedieneinheit weist zumindest eine Hilfsmedienleitung und das Brennerplenum, auch als Windbox bezeichnet, auf. Die Hilfsmedienleitung weist einen Einlass und einen Auslass auf. Der Einlass der Hilfsmedienleitung ist mit einer Hilfsmedienquelle verbunden. Das Hilfsmedium ist in der Regel ein Gas oder Gasgemisch, welches der Verbrennung der Brenngase dient. Im Idealfall werden kohlenstoffhaltige Brenngase durch das Hilfsmedium vollständig zu Kohlendioxid verbrannt. Wasserstoff als Brenngas wird durch das Hilfsmedium im Idealfall vollständig zu Wasser verbrannt, wobei das Wasser in der Verbrennungszone des Prozessbrenners als Dampf vorliegt. Die Hilfsmedienquelle stellt das Hilfsmedium bereit, welches über die Hilfsmedienleitung, eine Steigleitung, zum Brennerplenum transportiert wird. Innerhalb der Hilfsmedieneinheit, insbesondere innerhalb der Hilfsmedienleitung, kann eine Regelvorrichtung zur Regelung des Volumenstroms des Hilfsmediums angeordnet sein. In einem Beispiel weist eine solche Regelvorrichtung eine Vielzahl verstellbare Luftschlitze und/oder einen oder mehrere Luftregelklappen auf.

Das Brennerplenum, welches mit dem Hilfsmedienauslass verbunden ist, transportiert das Hilfsmedium zur Brennerspitze, in deren Bereich die Brennerkachel und die Verbrennungszone angeordnet ist, und dämpft den Schall aus dem umgebenden Befeuerungsraum. Das Brennerplenum ist in Nachbarschaft, unmittelbar oder mittelbar über weitere Bauteile, angrenzend zur Brennerkachel angeordnet. Die Hilfsmedienleitung kann ferner einen weiteren (Schall-)Dämpfer, welcher an das Brennerplenum angrenzend angeordnet ist, aufweisen.

Die Brennerkachel weist eine feuerfeste Oberfläche auf. In einem Beispiel besteht die feuerfeste Oberfläche aus einer Keramik. Die feuerfeste Oberfläche der Brennerkachel grenzt unmittelbar an die Verbrennungszone des Prozessbrenners an, in der im Betrieb Temperaturen von bis zu 2000 °C herrschen. Die Verbrennungszone wird zumindest teilweise durch die Flamme des Prozessbrenners gebildet.

Üblicherweise ist im Bereich der Brennerspitze, oft auch als Brennerhals oder Brennermuffel bezeichnet, ein Zündbrenner oder Pilotbrenner zum Starten der Verbrennungsreaktion angeordnet.

Eine bevorzugte Ausführungsform des erfindungsgemäßen Prozessbrenners ist dadurch gekennzeichnet, dass die zweite Brenngasdüse zum Einspeisen des zweiten Brenngases innerhalb des Brennerplenums angeordnet ist.

Eine bevorzugte Ausführungsform des erfindungsgemäßen Prozessbrenners ist dadurch gekennzeichnet, dass sich die zweite Brenngasleitung zumindest teilweise durch das Brennerplenum hindurch erstreckt.

Die Aufgaben der vorliegenden Erfindung werden ferner zumindest teilweise gelöst durch einen Dampfreformer oder Steamcracker, welcher einen erfindungsgemäßen Prozessbrenner aufweist.

Die Aufgaben der vorliegenden Erfindung werden ferner zumindest teilweise gelöst durch ein Verfahren zur Verbrennung einer Mehrzahl von Brenngasen mit einem gasförmigen Hilfsmedium in einem Prozessbrenner nach Anspruch 5.

Im Gegensatz zu bekannten Verfahren wird das zweite Brenngas nicht in die Verbrennungszone des Prozessbrenners eingespeist, sondern über die zweite Brenngasdüse in die Hilfsmedieneinheit des Prozessbrenners. Das erste Brenngas wird, wie aus Prozessbrennern des Standes der Technik bekannt, über die erste Brenngasdüse in die Verbrennungszone des Prozessbrenners eingespeist. Erst in der Verbrennungszone wird das zweite Brenngas, welches Kohlenmonoxid (CO) aufweist, mit dem ersten Brenngas in Kontakt gebracht und vermischt und durch das Hilfsmedium verbrannt. Auf dem Weg in die Verbrennungszone kommt das zweite Brenngas ausschließlich oder fast ausschließlich mit dem Hilfsmedium in Kontakt. Es wurde überraschenderweise festgestellt, dass durch diese Art der Prozessführung weniger feste Kohlenstoffablagerungen im Bereich der Brenngasdüsen oder stromaufwärts, beispielsweise im Bereich der Brenngasleitungen, gebildet werden.

Eine bevorzugte Ausführungsform des erfindungsgemäßen Verfahrens ist dadurch gekennzeichnet, dass das zweite Brenngas in das Brennerplenum der Hilfsmedieneinheit eingespeist wird.

Eine bevorzugte Ausführungsform des erfindungsgemäßen Verfahrens ist dadurch gekennzeichnet, dass das Brenngas der zweiten Brenngasquelle mindestens mindestens 90 mol-% Kohlenmonoxid aufweist, und weiter bevorzugt mindestens 95 mol-% Kohlenmonoxid aufweist.

Eine bevorzugte Ausführungsform des erfindungsgemäßen Verfahrens ist dadurch gekennzeichnet, dass die Hilfsmedienquelle Luft, Sauerstoff oder mit Sauerstoff angereicherte Luft umfasst.

Eine bevorzugte Ausführungsform des erfindungsgemäßen Verfahrens ist dadurch gekennzeichnet, dass das zweite Brenngas bei einer Temperatur von weniger als 160 °C über die zweite Brenngasdüse eingespeist wird, bevorzugt bei einer Temperatur von weniger als 140 °C, insbesondere bevorzugt bei einer Temperatur von weniger als 135 °C, und weiter bevorzugt bei einer Temperatur von weniger als 100 °C.

Die Aktivierungsenergie der Kohlenstoff-Bildungsreaktion aus Kohlenmonoxid gemäß Boudouard-Gleichgewicht liegt üblicherweise zwischen 150 kJ/mol und 400 kJ/mol, abhängig davon ob die Aktivierungsenergie durch einen Katalysator herabgesetzt wird oder nicht. Für die nicht katalysierte Reaktion, von der bei der Einspeisung von Kohlenmonoxid in einen Prozessbrenner auszugehen ist, wurden mit Hilfe des Programms Aspen+ in Computersimulationen maximal zulässige Temperaturen ermittelt. Diese maximale zulässigen Temperaturen sollten im Bereich der zweiten Brenngasdüse nicht überschritten werden, um die Bildung von festem Kohlenstoff aus Kohlenmonoxid zu unterbinden. Insbesondere wurde gefunden, dass eine Temperatur von 140 °C nicht überschritten werden sollte, weiter bevorzugt eine Temperatur von 135 °C nicht überschritten werden sollte, wobei noch niedrigere Temperaturen, insbesondere von weniger als 100 °C, weiter bevorzugt sind.

Eine bevorzugte Ausführungsform des erfindungsgemäßen Verfahrens ist dadurch gekennzeichnet, dass das Verhältnis des Volumenstroms des Hilfsmediums, insbesondere von Luft, im Verhältnis zum Volumenstrom des zweiten Brenngases bei 15:1 bis 10:1 liegt, vorzugsweise bei 14:1 bis 12:1 liegt.

Es wurde gefunden, dass die maximal zulässige Temperatur im Bereich der zweiten Brenngasdüse insbesondere bei den vorgenannten Verhältnissen des Volumenstroms des Hilfsmediums in Relation zum Volumenstrom des zweiten Brenngases eingehalten werden kann.

Eine bevorzugte Ausführungsform des erfindungsgemäßen Verfahrens ist dadurch gekennzeichnet, dass das zweite Brenngas bei einer Temperatur von 20 °C bis 50 °C in die zweite Brenngaseinheit eingeleitet wird, vorzugsweise bei einer Temperatur von 30 °C bis 40 °C in die zweite Brenngaseinheit eingeleitet wird.

Ferner ist bevorzugt, dass das Hilfsmedium bei einer Temperatur von 250 °C bis 350 °C in die Hilfsmedieneinheit eingeleitet wird.

Die Kohlenstoff-Bildungsreaktion kann insbesondere dann vermieden werden, wenn das Hilfsmedium auf einen möglichst hohen Temperaturwert vorgeheizt wird, und das zweite Brenngas möglichst kalt über die zweite Brenngasdüse in die Hilfsmedieneinheit eingespeist wird, wobei gleichzeitig die vorgenannten maximal zulässigen Temperaturen nicht überschritten werden sollten.

Die Aufgaben der vorliegenden Erfindung werden ferner zumindest teilweise gelöst durch eine Verwendung des erfindungsgemäßen Prozessbrenners in einem erfindungsgemäßen Verfahren.

Die Aufgaben der vorliegenden Erfindung werden ferner zumindest teilweise gelöst durch eine Verwendung des erfindungsgemäßen Prozessbrenners in einem Dampfreformer oder Steamcracker.

### Ausführungsbeispiel

Die Erfindung wird im Folgenden durch ein Ausführungsbeispiel und Zahlenbeispiele näher erläutert. In der folgenden detaillierten Beschreibung wird auf die beigefügte Zeichnung verwiesen, die einen Teil des Ausführungsbeispiels bildet und in welcher illustrativ eine spezifische Ausführungsform der Erfindung dargestellt ist. In diesem Zusammenhang wird richtungsspezifische Terminologie wie "oben", "unten", "vorne", "hinten" usw. in Bezug auf die Ausrichtung der beschriebenen Figur verwendet. Da Komponenten von Ausführungsformen in einer Vielzahl von Ausrichtungen positioniert werden können, dient die richtungsspezifische Terminologie zur Veranschaulichung und ist in keiner Weise limitierend. Der Fachmann ist sich darüber im Klaren, dass andere Ausführungsformen verwendet werden können und strukturelle oder logische Änderungen vorgenommen werden können, ohne vom Schutzumfang der Erfindung abzuweichen. Die folgende detaillierte Beschreibung ist daher nicht in einem einschränkenden Sinne zu verstehen, und der Schutzumfang der Ausführungsformen wird durch die beigefügten Ansprüche definiert. Die Zeichnung ist, soweit nicht anders angegeben, nicht maßstabsgetreu.

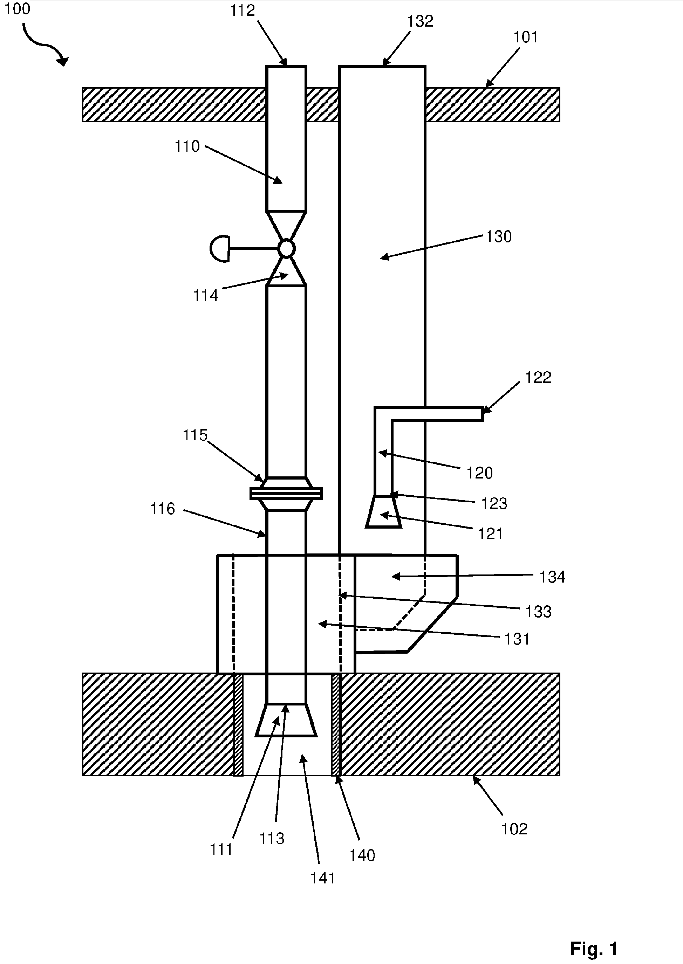

Es zeigt
- Figur 1: einen erfindungsgemäßen Prozessbrenner 100 mit einer ersten Brenngaseinheit, einer zweiten Brenngaseinheit und einer Hilfsmedieneinheit.

Prozessbrenner 100 gemäß Figur 1 ist für den Betrieb in einem Dampfreformer ausgelegt und wird mit Erdgas als erstem Brenngas und reinem Kohlenmonoxid (Reinheit >99 Gew.-%) als zweitem Brenngas betrieben. Als Hilfsmedium dient Umgebungsluft.

Der Prozessbrenner 100 ist über eine Stahlkonstruktion 101 befestigt, welche sich außerhalb des Verbrennungsraums des Dampfreformers befindet. Die Flamme des Prozessbrenners 100 strahlt von oben nach unten in den Strahlungsraum des Dampfreformers ab, welcher durch eine feuerfeste Wand 102 nach außen hin begrenzt wird. Im Strahlungsraum des Dampfreformers sind mehrere mit Nickel-Katalysator befüllte Reaktionsrohre angeordnet, welche durch eine Vielzahl des dargestellten Prozessbrenners 100 beheizt werden. Im Innern der Reaktionsrohre wird in einer endothermen Reaktion Erdgas mit Wasserdampf zu Synthesegas umgesetzt.

Der Prozessbrenner 100 weist eine erste Brenngaseinheit auf, welche zumindest eine erste Brenngasleitung 110, eine erste Brenngasdüse 111, eine Durchflussregelvorrichtung 114, einen Flansch 115, sowie eine Lanze 116 umfasst. Die erste Brenngasleitung 110 weist einen ersten Brenngaseinlass 112 und einen ersten Brenngasauslass 113 auf. Der erste Brenngaseinlass 112 steht in Fluidverbindung mit einer ersten Brenngasquelle (nicht gezeigt). Bei der ersten Brenngasquelle handelt es sich um Erdgas. Die Menge des Durchflusses des ersten Brenngases (Erdgas), das heißt der Volumenstrom des ersten Brenngases, wird über die Durchflussregelvorrichtung 114 variiert. Teil der ersten Brenngasleitung 110 ist die Brennerlanze 116, welche über einen Flansch 115 mit dem oberen Teilstück der Brenngasleitung 110 verbunden ist. Die Brennerlanze 116, welche somit einen Teil der ersten Brenngasleitung 110 bildet, erstreckt sich teilweise durch ein Brennerplenum 131 und mündet in der ersten Brenngasdüse 111, über welche das erste Brenngas in den Prozessbrenner 100, genauer in einen Verbrennungsraum 141 des Prozessbrenners 100, eingespeist wird.

Der Prozessbrenner 100 weist ferner eine zweite Brenngaseinheit auf, welche zumindest eine zweite Brenngasleitung 120 und eine zweite Brenngasdüse 121 umfasst. Die zweite Brenngasleitung 120 kann ebenfalls eine Durchflussregelvorrichtung für das zweite Brenngas umfassen (nicht gezeigt). Die zweite Brenngasleitung 120 weist einen zweiten Brenngaseinlass 122 und einen zweiten Brenngasauslass 123 auf. Der zweite Brenngaseinlass 122 steht in Fluidverbindung mit einer zweiten Brenngasquelle (nicht gezeigt). Bei der zweiten Brenngasquelle handelt es sich um reines Kohlenmonoxid (Reinheit mind. 99 Gew.-%). Die zweite Brenngasdüse 121 ist über den zweiten Brenngasauslass 123 mit der zweiten Brenngasleitung verbunden. Die zweite Brenngasdüse ist innerhalb einer Hilfsmedieneinheit, genauer innerhalb einer Hilfsmedienleitung 130 angeordnet. Der in die zweite Brenngasdüse 121 mündende Teil der zweiten Brenngasleitung 120 kann ebenfalls als Brennerlanze ausgestaltet sein.

Der Prozessbrenner 100 weist ferner eine Hilfsmedieneinheit auf, welche zumindest eine Hilfsmedienleitung 130, einen Schalldämpfer 134 und ein Brennerplenum 131 (Windbox) umfasst. Die Hilfsmedienleitung 130 umfasst einen Hilfsmedieneinlass 132 und einen Hilfsmedienauslass 133. Der Hilfsmedieneinlass 132 steht in Fluidverbindung mit einer Hilfsmedienquelle (nicht gezeigt). Das Hilfsmedium der Hilfsmedienquelle ist Umgebungsluft. Der Hilfsmedienauslass 133 ist mit dem Brennerplenum 131 verbunden oder steht zumindest mit dem Brennerplenum 131 in Fluidverbindung. Durch das Brennerplenum 131 wird das Hilfsmedium (Luft) in Richtung der Brennerspitze oder des Brennerhalses (unterer Teil des Prozessbrenners) geleitet und verteilt. Teil der Hilfsmedienleitung 130 ist der Schalldämpfer 134, welcher hier den Hilfsmedienauslass 133 umfasst und in das Brennerplenum 131 mündet. Der Schalldämpfer 134 dämpft den Schall des angrenzend angeordneten Reformerofens.

An das Brennerplenum 131 angrenzend angeordnet ist die Brennerkachel 140, welche hier als hohlzylinderförmige Brennerkachel 140 ausgestaltet ist und zumindest auf ihrer Innenseite eine feuerfeste Oberfläche aufweist (nicht gezeigt). In anderen Ausführungsformen kann das Brennerplenum 131 lediglich in Fluidverbindung mit der Brennerkachel 140 stehen, ohne dass eine unmittelbare Verbindung zwischen Brennerplenum 131 und Brennerkachel 140 besteht. An die feuerfeste Oberfläche der Brennerkachel 140 grenzt der Verbrennungsraum 141 des Prozessbrenners 100 an, in dem die eigentliche Verbrennung des ersten und zweiten Brenngases mit dem Hilfsmedium (Luft) stattfindet. Ein Teil der ersten Brenngasleitung 110, hier die Brennerlanze 116, und die erste Brenngasdüse 111 erstrecken sich in den Verbrennungsraum. Im Verbrennungsraum 141 wird eine Flamme erzeugt, die nach unten, in den Strahlungsraum des Dampfreformers, abstrahlt.

Der erfindungsgemäße Prozessbrenner 100 kann mehrere erste und/oder zweite Brenngaseinheiten umfassen. In einem Beispiel kann eine erste Brenngaseinheit zentral angeordnet sein und von mehreren weiteren ersten Brenngaseinheiten umgeben sein. Der erfindungsgemäße Prozessbrenner 100 kann dadurch als *fuel staged* oder *air staged* Prozessbrenner ausgestaltet sein. In diesen dem Fachmann bekannten Konfigurationen wird die Verbrennungsreaktion verlangsamt und dadurch die nicht erwünschten NOx Emissionen verringert. Der erfindungsgemäße Prozessbrenner weist darüberhinausgehend einen Pilot- oder Startbrenner im Bereich der Brennerkachel 140 auf, um die Verbrennungsreaktion innerhalb der Verbrennungszone 141 zu initiieren.

Die zweite Brenngasdüse 121 kann in alternativen Ausführungsformen auch innerhalb des Schalldämpfers 134 oder des Brennerplenums 131, die beide einen Teil der Hilfsmedieneinheit bilden, angeordnet sein. In der Verbrennungszone 141 können Temperaturen von ca. 1500 bis zu 2000 °C herrschen. Die Temperaturen innerhalb der Hilfsmedieneinheit sind hingegen um ein vielfaches niedriger. Insbesondere kann der erfindungsgemäße Prozessbrenner 100 derart gestaltet sein, dass die Temperaturen am Auslass der zweiten Brenngasdüse 121 unter 200 °C oder sogar unter 100 °C liegen. Dadurch wird faktisch ausgeschlossen, dass es am Auslass der zweiten Brenngasdüse 121 zur nicht erwünschten Boudouard-Reaktion von zwei mol Kohlenmonoxid zu einem mol festem Kohlenstoff (Graphit) und Kohlendioxid kommt, da die Aktivierungsenergie für diese Reaktion nicht erreicht wird. Damit ist die zweite Brenngaseinheit nicht von Verstopfungen durch Kohlenstoff-Ablagerungen betroffen. Zwar steigt die Temperatur des zweiten Brenngases anschließend in Richtung des Brennerplenums 131 weiter an, und schließlich "sieht" auch das zweite Brenngas in der Verbrennungszone 141 hohe Temperaturen - jedoch findet hier erstens eine Verdünnung mit dem ersten Brenngas statt, und es ferner quasi ausgeschlossen, dass sich in der Verbrennungszone 141 gebildeter Kohlenstoff auf der Innenseite der ersten Brenngasdüse 111 ablagert. Schließlich herrscht in der ersten Brenngasdüse 111 in Richtung des Verbrennungsraums ein gewisser Druckabfall, der dafür sorgt dass Kohlenstoffpartikel nicht in das Innere der zweiten Brenngasdüse 111 gelangen, sondern mit dem Rauchgas in Richtung des Strahlungsraums des Reformerofens weggeführt werden.

In der folgenden Tabelle werden vier erfindungsgemäße Beispiele 1 bis 4 wiedergegeben, deren Daten durch Computersimulationen mit Hilfe der Software Aspen+ ermittelt wurden.

| | | Beispiel 1 | Beispiel 2 | Beispiel 3 | Beispiel 4 |
|---|---|---|---|---|---|
| Flussrate CO | Nm³/h | 151 | 30 | 151 | 30 |
| Innendurchmesser (CO-Auslass zweite Brenngasleitung) | mm | 20,9 | 20,9 | 15,8 | 15,8 |
| T (Luft) | °C | 310 | 310 | 310 | 310 |
| T (CO) | °C | 35 | 35 | 35 | 35 |
| T (Zweite Brenngasleitung Auslass, Außenseite) | °C | 99 | 178 | 86 | 159 |
| T (Zweite Brenngasleitung Auslass, Innenseite) | °C | 99 | 176 | 84 | 157 |

Es wurde von reinem Kohlenmonoxid als zweites Brenngas ausgegangen, welches mit einer Temperatur von 35 °C bei einem Druck von 3 barg über die zweite Brenngasdüse im Bereich der Hilfsmedieneinheit in den Prozessbrenner eingespeist wird. Das Hilfsmedium, in diesem Fall vorgeheizte Luft, durchströmt die Hilfsmedienleitung bei einer Temperatur von 310 °C. Variiert wurde die Flussrate des Kohlenmonoxids, welches über die zweite Brenngasleitung im Bereich der Hilfsmedieneinheit in den Prozessbrenner eingespeist wird, sowie der Durchmesser am Auslass für Kohlenmonoxid an der zweiten Brenngasleitung (zweiter Brenngasauslass), welcher in die zweite Brenngasdüse mündet.

Durch die Anordnung der zweiten Brenngasdüse im Bereich der Hilfsmedieneinheit sind im Bereich der zweiten Brenngasdüse Temperaturen von deutlich unter 200 °C zu erwarten, in vorteilhafter Weise von unter 100 °C, wenn die Flussrate an Kohlenmonoxid entsprechend hoch ist (Beispiele 1 und 3). Durch die niedrigen Temperaturen am Auslass der zweiten Brenngasleitung wird die Kohlenstoffbildung aus Kohlenmonoxid in diesem Bereich effektiv unterdrückt, insbesondere bei hohen CO Flussraten. Bei den hohen Flussraten der Beispiele 1 und 3 ist davon auszugehen, dass die Bildung von festem Kohlenstoff aus CO besonders effektiv unterdrückt wird, da bei Temperaturen von unter 135 °C davon auszugehen ist, dass die Aktivierungsenergie der Boudouard Reaktion von zwei mol Kohlenmonoxid zu einem mol festem Kohlenstoff (Graphit) und Kohlendioxid (nicht katalysierter Fall) zumindest im Bereich des Auslasses der zweiten Brenngasleitung nicht erreicht wird.

Die folgenden Tabelle zeigt zwei weitere erfindungsgemäße Beispiele 5 und 6. Die Temperatur für das Hilfsmedium (Luft) wurde hier etwas niedriger gewählt, und der Volumenstrom des Hilfsmediums so eingestellt, dass ein Verhältnis der Volumenströme von Hilfsmedium zu Kohlenmonoxid (zweites Brenngas) von ca. 13:1 resultierte. In beiden Beispielen wurde wiederum eine Temperatur von deutlich unter 135 °C im Bereich des Auslasses der zweiten Brenngasleitung ermittelt, so dass davon auszugehen ist dass die Aktivierungsenergie für die Kohlenstoffbildungsreaktion zumindest im Bereich des Auslasses der zweiten Brenngasleitung nicht erreicht wird.

| | | Beispiel 5 | Beispiel 6 |
|---|---|---|---|
| Flussrate CO | Nm³/h | 54,8 | 42,8 |
| Flussrate Luft | Nm³/h | 706,4 | 551,0 |
| Innendurchmesser (CO-Auslass) | mm | 20,9 | 20,9 |
| T (Luft) | °C | 270 | 270 |
| T (CO) | °C | 35 | 35 |
| T (Brenngasleitung Auslass, Außenseite) | °C | 117 | 121 |
| T (Brenngasleitung Auslass, Innenseite) | °C | 115 | 119 |

### Bezugszeichenliste

- 100: Prozessbrenner
- 101: Stahlkonstruktion
- 102: Reformerofenwand
- 110: Erste Brenngasleitung
- 111: Erste Brenngasdüse
- 112: Erster Brenngaseinlass
- 113: Erster Brenngasauslass
- 114: Durchflussregelvorrichtung
- 115: Flansch
- 116: Brennerlanze
- 120: Zweite Brenngasleitung
- 121: Zweite Brenngasdüse
- 122: Zweiter Brenngaseinlass
- 123: Zweiter Brenngasauslass
- 130: Hilfsmedienleitung
- 131: Brennerplenum
- 132: Hilfsmedieneinlass
- 133: Hilfsmedienauslass
- 134: Schalldämpfer
- 140: Brennerkachel
- 141: Verbrennungszone

## Patentansprüche

1. Prozessbrenner (100), zur Verbrennung einer Mehrzahl von Brenngasen mit einem gasförmigen Hilfsmedium, wobei eines der Brenngase Kohlenmonoxid (CO) umfasst, aufweisend
a. eine erste Brenngaseinheit zum Einleiten eines ersten Brenngases, aufweisend eine erste Brenngasleitung (110) und eine erste Brenngasdüse (111), wobei die erste Brenngasleitung (110) einen ersten Brenngaseinlass (112) und einen ersten Brenngasauslass (113) aufweist, wobei der erste Brenngaseinlass (112) in Fluidverbindung mit einer ersten Brenngasquelle steht und der erste Brenngasauslass (113) mit der ersten Brenngasdüse (111) verbunden ist;
b. eine zweite Brenngaseinheit zum Einleiten eines zweiten Brenngases, aufweisend eine zweite Brenngasleitung (120) und eine zweite Brenngasdüse (121), wobei die zweite Brenngasleitung (120) einen zweiten Brenngaseinlass (122) und einen zweiten Brenngasauslass (123) aufweist, wobei der zweite Brenngaseinlass (122) in Fluidverbindung mit einer zweiten Brenngasquelle steht, wobei das Brenngas der zweiten Brenngasquelle zumindest Kohlenmonoxid (CO) aufweist, und der zweite Brenngasauslass (123) mit der zweiten Brenngasdüse (121) verbunden ist;
c. eine Hilfsmedieneinheit, aufweisend eine Hilfsmedienleitung (130) und ein Brennerplenum (131), wobei die Hilfsmedienleitung (130) einen Hilfsmedieneinlass (132) und einen Hilfsmedienauslass (133) umfasst, wobei der Hilfsmedieneinlass (132) in Fluidverbindung mit einer Hilfsmedienquelle steht, und der Hilfsmedienauslass (133) mit dem Brennerplenum (131) verbunden ist;
d. eine Brennerkachel (140), wobei die Brennerkachel (140) an das Brennerplenum (131) angrenzend angeordnet ist, und die Brennerkachel (140) eine feuerfeste Oberfläche aufweist, wobei die feuerfeste Oberfläche an eine Verbrennungszone (141) des Prozessbrenners (100) angrenzt, wobei die Brennerkachel (140) und die Verbrennungszone (141) zur Verbrennung des ersten Brenngases und des zweiten Brenngases mit dem Hilfsmedium ausgelegt sind,
wobei das Brenngas der zweiten Brenngasquelle mindestens 50 mol-% Kohlenmonoxid aufweist,
die erste Brenngasdüse (111) zum Einspeisen des ersten Brenngases innerhalb der Verbrennungszone (141) angeordnet ist und
die zweite Brenngasdüse (121) zum Einspeisen des zweiten Brenngases innerhalb der Hilfsmedieneinheit angeordnet ist.

2. Prozessbrenner (100) nach Anspruch 1, wobei die zweite Brenngasdüse (121) zum Einspeisen des zweiten Brenngases innerhalb des Brennerplenums (131) angeordnet ist.

3. Prozessbrenner (100) nach Anspruch 1 oder 2, wobei sich die zweite Brenngasleitung (110) zumindest teilweise durch das Brennerplenum (131) hindurch erstreckt.

4. Dampfreformer oder Steamcracker, aufweisend einen Prozessbrenner nach einem der Ansprüche 1 bis 3.

5. Verfahren zur Verbrennung einer Mehrzahl von Brenngasen mit einem gasförmigen Hilfsmedium in einem Prozessbrenner (100), wobei der Prozessbrenner (100) eine erste Brenngaseinheit, eine zweite Brenngaseinheit und eine Hilfsmedieneinheit aufweist, und wobei eines der Brenngase Kohlenmonoxid (CO) aufweist, aufweisend die folgenden Verfahrensschritte:
a. Einleiten eines ersten Brenngases aus einer ersten Brenngasquelle in eine erste Brenngaseinheit, wobei die erste Brenngaseinheit eine erste Brenngasleitung (110) und eine erste Brenngasdüse (111) aufweist;
b. Einleiten eines zweiten Brenngases aus einer zweiten Brenngasquelle in eine zweite Brenngaseinheit, wobei das Brenngas der zweiten Brenngasquelle zumindest Kohlenmonoxid (CO) aufweist, und wobei die zweite Brenngaseinheit eine zweite Brenngasleitung (120) und eine zweite Brenngasdüse (121) aufweist;
c. Einleiten eines Hilfsmediums aus einer Hilfsmedienquelle in eine Hilfsmedieneinheit, wobei die Hilfsmedieneinheit eine Hilfsmedienleitung (130) und ein Brennerplenum (131) aufweist;
d. Einspeisen des ersten Brenngases über die erste Brenngasdüse (111) in eine Verbrennungszone (141) des Prozessbrenners (100), wobei die Verbrennungszone (141) an eine feuerfeste Oberfläche einer Brennerkachel (140) angrenzend angeordnet ist, und die Brennerkachel (140) an das Brennerplenum (131) angrenzend angeordnet ist;
e. Einspeisen des zweiten Brenngases über die zweite Brenngasdüse (121) in die Hilfsmedieneinheit;
f. Verbrennen des ersten Brenngases und des zweiten Brenngases mit dem Hilfsmedium in der Verbrennungszone (141) des Prozessbrenners (100),
**dadurch gekennzeichnet, dass**
das Brenngas der zweiten Brenngasquelle mindestens 50 mol-% Kohlenmonoxid aufweist.

6. Verfahren nach Anspruch 5, **dadurch gekennzeichnet, dass** das zweite Brenngas in das Brennerplenum (131) der Hilfsmedieneinheit eingespeist wird.

7. Verfahren nach Anspruch 5 oder 6, **dadurch gekennzeichnet, dass** das Brenngas der zweiten Brenngasquelle mindestens 90 mol-% Kohlenmonoxid aufweist, bevorzugt mindestens 95 mol-% Kohlenmonoxid aufweist.

8. Verfahren nach einem der Ansprüche 5 bis 7, **dadurch gekennzeichnet, dass** die Hilfsmedienquelle Luft, Sauerstoff oder mit Sauerstoff angereicherte Luft umfasst.

9. Verfahren nach einem der Ansprüche 5 bis 8, **dadurch gekennzeichnet, dass** das zweite Brenngas bei einer Temperatur von weniger als 160 °C über die zweite Brenngasdüse (121) eingespeist wird, bevorzugt bei einer Temperatur von weniger als 140 °C, weiter bevorzugt bei einer Temperatur von weniger als 100 °C.

10. Verfahren nach einem der Ansprüche 5 bis 9, **dadurch gekennzeichnet, dass** das Verhältnis des Volumenstroms des Hilfsmediums, insbesondere von Luft, im Verhältnis zum Volumenstrom des zweiten Brenngases bei 15:1 bis 10:1 liegt, vorzugsweise bei 14:1 bis 12:1 liegt.

11. Verfahren nach einem der Ansprüche 5 bis 10, **dadurch gekennzeichnet, dass** das zweite Brenngas bei einer Temperatur von 20 °C bis 50 °C in die zweite Brenngaseinheit eingeleitet wird, vorzugsweise bei einer Temperatur von 30 °C bis 40 °C in die zweite Brenngaseinheit eingeleitet wird.

12. Verfahren nach einem der Ansprüche 5 bis 11, **dadurch gekennzeichnet, dass** das Hilfsmedium bei einer Temperatur von 250 °C bis 350 °C in die Hilfsmedieneinheit eingeleitet wird.

13. Verwendung des Prozessbrenners nach einem der Ansprüche 1 bis 4 in einem Verfahren nach einem der Ansprüche 5 bis 12.

14. Verwendung des Prozessbrenners nach einem der Ansprüche 1 bis 4 in einem Dampfreformer oder Steamcracker.

## Claims

1. Process burner (100) for combustion of a plurality of fuel gases with a gaseous auxiliary medium, wherein one of the fuel gases comprises carbon monoxide (CO), comprising
a. a first fuel gas unit for introducing a first fuel gas comprising a first fuel gas conduit (110) and a first fuel gas nozzle (111), wherein the first fuel gas conduit (110) comprises a first fuel gas inlet (112) and a first fuel gas outlet (113), wherein the first fuel gas inlet (112) is in fluid connection with a first fuel gas source and the first fuel gas outlet (113) is connected to the first fuel gas nozzle (111);
b. a second fuel gas unit for introducing a second fuel gas comprising a second fuel gas conduit (120) and a second fuel gas nozzle (121), wherein the second fuel gas conduit (120) comprises a second fuel gas inlet (122) and a second fuel gas outlet (123), wherein the second fuel gas inlet (122) is in fluid connection with a second fuel gas source, wherein the fuel gas from the second fuel gas source comprises at least carbon monoxide (CO) and the second fuel gas outlet (123) is connected to the second fuel gas nozzle (121);
c. an auxiliary media unit comprising an auxiliary media conduit (130) and a burner plenum (131), wherein the auxiliary media conduit (130) comprises an auxiliary media inlet (132) and an auxiliary media outlet (133), wherein the auxiliary media inlet (132) is in fluid connection with an auxiliary media source and the auxiliary media outlet (133) is connected to the burner plenum (131);
d. a burner tile (140), wherein the burner tile (140) adjoins the burner plenum (131) and the burner tile (140) has a refractory surface, wherein the refractory surface adjoins a combustion zone (141) of the process burner (100), wherein the burner tile (140) and the combustion zone (141) are configured for combustion of the first fuel gas and the second fuel gas with the auxiliary medium,
wherein the fuel gas from the second fuel gas source comprises at least 50 mol% of carbon monoxide,
the first fuel gas nozzle (111) for introducing the first fuel gas is arranged inside the combustion zone (141) and the second fuel gas nozzle (121) for introducing the second fuel gas is arranged inside the auxiliary media unit.

2. Process burner (100) according to Claim 1, wherein the second fuel gas nozzle (121) for introducing the second fuel gas is arranged inside the burner plenum (131) .

3. Process burner (100) according to Claim 1 or 2, wherein the second fuel gas conduit (110) at least partially extends through the burner plenum (131).

4. Steam reformer or steam cracker, comprising a process burner according to any of Claims 1 to 3.

5. Process for combustion of a plurality of fuel gases with a gaseous auxiliary medium in a process burner (100), wherein the process burner (100) comprises a first fuel gas unit, a second fuel gas unit and an auxiliary media unit and wherein one of the fuel gases comprises carbon monoxide (CO), comprising the following process steps:
a. introducing a first fuel gas from a first fuel gas source into a first fuel gas unit, wherein the first fuel gas unit comprises a first fuel gas conduit (110) and a first fuel gas nozzle (111);
b. introducing a second fuel gas from a second fuel gas source into a second fuel gas unit, wherein the fuel gas from the second fuel gas source comprises at least carbon monoxide (CO) and wherein the second fuel gas unit comprises a second fuel gas conduit (120) and a second fuel gas nozzle (121);
c. introducing an auxiliary medium from an auxiliary media source into an auxiliary media unit, wherein the auxiliary media unit comprises an auxiliary media conduit (130) and a burner plenum (131);
d. introducing the first fuel gas via the first fuel gas nozzle (111) into a combustion zone (141) of the process burner (100), wherein the combustion zone (141) adjoins a refractory surface of a burner tile (140) and the burner tile (140) adjoins the burner plenum (131);
e. introducing the second fuel gas into the auxiliary media unit via the second fuel gas nozzle (121);
f. combusting the first fuel gas and the second fuel gas with the auxiliary medium in the combustion zone (141) of the process burner (100),
**characterized in that**
the fuel gas from the second fuel gas source comprises at least 50 mol% of carbon monoxide.

6. Process according to Claim 5, **characterized in that** the second fuel gas is introduced into the burner plenum (131) of the auxiliary media unit.

7. Process according to Claim 5 or 6, **characterized in that** the fuel gas from the second fuel gas source comprises at least 90 mol% of carbon monoxide, preferably at least 95 mol% of carbon monoxide.

8. Process according to any of Claims 5 to 7, **characterized in that** the auxiliary media source comprises air, oxygen or oxygen-enriched air.

9. Process according to any of Claims 5 to 8, **characterized in that** the second fuel gas is introduced via the second fuel gas nozzle (121) at a temperature of less than 160°C, preferably at a temperature of less than 140°C, more preferably at a temperature of less than 100°C.

10. Process according to any of Claims 5 to 9, **characterized in that** the ratio of the volume flow of the auxiliary medium, in particular of air, relative to the volume flow of the second fuel gas, is 15:1 to 10:1, preferably 14:1 to 12:1.

11. Process according to any of Claims 5 to 10, **characterized in that** the second fuel gas is introduced into the second fuel gas unit at a temperature of 20°C to 50°C, preferably introduced into the second fuel gas unit at a temperature of 30°C to 40°C.

12. Process according to any of Claims 5 to 11, **characterized in that** the auxiliary medium is introduced into the auxiliary media unit at a temperature of 250°C to 350°C.

13. Use of the process burner according to any of Claims 1 to 4 in a process according to any of Claims 5 to 12.

14. Use of the process burner according to any of Claims 1 to 4 in a steam reformer or steam cracker.

## Revendications

1. Brûleur de processus (100), pour la combustion d'une multitude de gaz combustibles par un agent auxiliaire gazeux, l'un des gaz combustibles comprenant du monoxyde de carbone (CO), présentant
a. une première unité à gaz combustible destinée à introduire un premier gaz combustible, présentant une première conduite à gaz combustible (110) et une première buse à gaz combustible (111), la première conduite à gaz combustible (110) présentant une première entrée à gaz combustible (112) et une première sortie à gaz combustible (113), la première entrée à gaz combustible (112) étant en communication fluidique avec une première source de gaz combustible et la première sortie à gaz combustible (113) étant reliée à la première buse à gaz combustible (111) ;
b. une deuxième unité à gaz combustible destinée à introduire un deuxième gaz combustible, présentant une deuxième conduite à gaz combustible (120) et une deuxième buse à gaz combustible (121), la deuxième conduite à gaz combustible (120) présentant une deuxième entrée à gaz combustible (122) et une deuxième sortie à gaz combustible (123), la deuxième entrée à gaz combustible (122) étant en communication fluidique avec une deuxième source de gaz combustible, le gaz combustible de la deuxième source de gaz combustible présentant au moins du monoxyde de carbone (CO), et la deuxième sortie à gaz combustible (123) étant reliée à la deuxième buse à gaz combustible (121) ;
c. une unité à agent auxiliaire, présentant une conduite à agent auxiliaire (130) et un collecteur de brûleur (131), la conduite à agent auxiliaire (130) comprenant une entrée à agent auxiliaire (132) et une sortie à agent auxiliaire (133), l'entrée à agent auxiliaire (132) étant communication fluidique avec une source d'agent auxiliaire et la sortie à agent auxiliaire (133) étant reliée au collecteur de brûleur (131) ;
d. un carneau de brûleur (140), le carneau de brûleur (140) étant agencé de manière adjacente au collecteur de brûleur (131) et le carneau de brûleur (140) présentant une surface réfractaire, la surface réfractaire étant adjacente à une zone de combustion (141) du brûleur de processus (100), le carneau de brûleur (140) et la zone de combustion (141) étant conçus pour brûler le premier gaz combustible et le deuxième gaz combustible à l'aide de l'agent auxiliaire,
le gaz combustible de la deuxième source de gaz combustible présentant au moins 50% en mole de monoxyde de carbone,
la première buse à gaz combustible (111) destinée à injecter le premier gaz combustible étant agencée à l'intérieur de la zone de combustion (141) et
la deuxième buse à gaz combustible (121) destinée à injecter le deuxième gaz combustible étant agencée à l'intérieur de l'unité à agent auxiliaire.

2. Brûleur de processus (100) selon la revendication 1, la deuxième buse à gaz combustible (121) destinée à injecter le deuxième gaz combustible étant agencée à l'intérieur du collecteur de brûleur (131).

3. Brûleur de processus (100) selon la revendication 1 ou 2, la deuxième conduite à gaz combustible (110) s'étendant au moins partiellement à travers le collecteur de brûleur (131).

4. Reformeur à la vapeur ou craqueur à la vapeur, présentant un brûleur de processus selon l'une des revendications 1 à 3.

5. Procédé pour la combustion d'une multitude de gaz combustibles à l'aide d'un agent auxiliaire gazeux dans un brûleur de processus (100), le brûleur de processus (100) présentant une première unité à gaz combustible, une deuxième unité à gaz combustible et une unité à agent auxiliaire et l'un des gaz combustibles présentant du monoxyde de carbone (CO), présentant les étapes de procédés suivantes :
a. introduction d'un premier gaz combustible provenant d'une première source de gaz combustible dans une première unité à gaz combustible, la première unité à gaz combustible présentant une première conduite à gaz combustible (110) et une première buse à gaz combustible (111) ;
b. introduction d'un deuxième gaz combustible provenant d'une deuxième source de gaz combustible dans une deuxième unité à gaz combustible, le gaz combustible de la deuxième source de gaz combustible présentant au moins du monoxyde de carbone (CO), et la deuxième unité à gaz combustible présentant une deuxième conduite à gaz combustible (120) et un deuxième brûleur à gaz combustible (121) ;
c. introduction d'un agent auxiliaire provenant d'une source d'agent auxiliaire dans une unité à agent auxiliaire, l'unité à agent auxiliaire présentant une conduite à agent auxiliaire (130) et un collecteur de brûleur (131) ;
d. injection du premier gaz combustible par l'intermédiaire de la première buse à gaz combustible (111) dans une zone de combustion (141) du brûleur de processus (100), la zone de combustion (141) étant agencée de manière adjacente à une surface réfractaire d'un carneau de brûleur (140) et le carneau de brûleur (140) étant agencé de manière adjacente au collecteur de brûleur (131) ;
e. injection du deuxième gaz combustible par l'intermédiaire de la deuxième buse à gaz combustible (121) dans l'unité à agent auxiliaire ;
f. combustion du premier gaz combustible et du deuxième gaz combustible à l'aide de l'agent auxiliaire dans la zone de combustion (141) du brûleur de processus (100),
**caractérisé en ce que**
le gaz combustible de la deuxième source de gaz combustible présente au moins 50% en mole de monoxyde de carbone.

6. Procédé selon la revendication 5, **caractérisé en ce que** le deuxième gaz combustible est injecté dans le collecteur de brûleur (131) de l'unité à agent auxiliaire.

7. Procédé selon la revendication 5 ou 6, **caractérisé en ce que** le gaz combustible de la deuxième source de gaz combustible présente au moins 90% en mole de monoxyde de carbone, de préférence au moins 95% en mole de monoxyde de carbone.

8. Procédé selon l'une des revendications 5 à 7, **caractérisé en ce que** la source d'agent auxiliaire comprend de l'air, de l'oxygène ou de l'air enrichi en oxygène.

9. Procédé selon l'une des revendications 5 à 8, **caractérisé en ce que** le deuxième gaz combustible est injecté à une température inférieure à 160°C par l'intermédiaire de la deuxième buse à gaz combustible (121), de préférence à une température inférieure à 140°C, plus préférablement à une température inférieure à 100°C.

10. Procédé selon l'une des revendications 5 à 9, **caractérisé en ce que** le rapport du flux volumique de l'agent auxiliaire, en particulier de l'air, au flux volumique du deuxième gaz combustible se situe à 15:1 jusqu'à 10:1, de préférence à 14:1 jusqu'à 12:1.

11. Procédé selon l'une des revendications 5 à 10, **caractérisé en ce que** le deuxième gaz combustible est introduit à une température de 20°C à 50°C dans la deuxième unité à gaz combustible, de préférence introduit à une température de 30°C à 40°C dans la deuxième unité à gaz combustible.

12. Procédé selon l'une des revendications 5 à 11, **caractérisé en ce que** l'agent auxiliaire est introduit à une température de 250°C à 350°C dans l'unité à agent auxiliaire.

13. Utilisation du brûleur de processus selon l'une des revendications 1 à 4 dans un procédé selon l'une des revendications 5 à 12.

14. Utilisation du brûleur de processus selon l'une des revendications 1 à 4 dans un reformeur à la vapeur ou un craqueur à la vapeur.
